# EUROPÄISCHE PATENTSCHRIFT

(11) **EP 0 462 387 B1**
(45) Veröffentlichungstag und Bekanntmachung des Hinweises auf die Patenterteilung: **02.11.1994**
(21) Anmeldenummer: 91107299.9
(22) Anmeldetag: 06.05.1991
(51) Int. Cl.: F01D 21/18, F01D 17/26, F16L 55/10

(54) **Hydraulisches Sicherheits- und Regelsystem**
Hydraulic control and safety system
Système hydraulique de contrôle et sécurité

(30) Priorität: 18.06.1990 CH 2023/90
(43) Veröffentlichungstag der Anmeldung: 27.12.1991
(73) Patentinhaber: ASEA BROWN BOVERI AG, 5400 Baden (CH)
(72) Erfinder: Burch, Eduard, CH-8116 Würenlos (CH); Frey, Heinz, Ch-Menziken (CH)

(56) Entgegenhaltungen:
- EP-A- 0 023 591
- EP-A- 0 127 027
- CH-A- 239 817
- DE-A- 1 551 206
- US-A- 2 658 484

## Beschreibung

### TECHNISCHES GEBIET

Die vorliegende Erfindung geht aus von einem hydraulischen Sicherheits- und Regelsystem für die Dampfzuführung einer Turbine gemäss dem ersten Teil des Anspruchs 1.

### STAND DER TECHNIK

Aus der Schrift EP 0 127 027 ist ein hydraulisches Regelsystem für die Dampfzuführung einer Turbine bekannt. Bei diesem Regelsystem werden mit Hilfe von Stellantrieben Turbinenventile betätigt. Ein Sicherheitsölkreis ist hier nicht vorgesehen, er kann jedoch mit vergleichsweise grossem Aufwand in das Regelsystem eingebaut werden.

Es sind zudem hydraulische Sicherheits- und Regelsysteme für die Dampfzuführung einer Turbine bekannt, bei welchen ein Sicherheitsölkreis vorgesehen ist. Kraftöl, welches für die Betätigung der Antriebe von Schnellschluss- und Dampfstellventilen sorgt, wird in einer separaten Rohrleitung zugeführt. Durch den Sicherheitsölkreis wird sichergestellt, dass bei einem Systemausfall die Turbine in einen sicheren Betriebszustand gebracht werden kann. In den Sicherheitsölkreis wird jeweils nur soviel Öl unter Druck nachgespeist, dass Leckverluste gedeckt werden. Das durch Lecks austretende Öl und das die Antriebe verlassende Kraftöl wird in einer Rückleitung gesammelt und in eine Ölablaufvorrichtung geführt. Eine Pumpe setzt das Öl unter Druck und befördert es aus der Ölablaufvorrichtung heraus erneut in den Umlauf. Durch eine Sicherheits-Absteuereinheit wird der Druck im System überwacht. Bei diesem Sicherheits- und Regelsystem werden drei Rohrleitungen nämlich die für das Kraftöl, die für den Sicherheitsölkreis und die Rückleitung in die Ölablaufvorrichtung benötigt.

Dieses Dreirohr-Sicherheits- und Regelsystem arbeitet zuverlässig. Der Aufwand für das Erstellen von drei Rohrleitungen ist jedoch vergleichsweise hoch, zudem steigt mit zunehmender Anzahl von Rohrverbindungen auch die Gefahr von Leckagen.

### DARSTELLUNG DER ERFINDUNG

Hier will die Erfindung Abhilfe schaffen. Die Erfindung, wie sie in den Ansprüchen gekennzeichnet ist, löst die Aufgabe, ein hydraulisches Sicherheits- und Regelsystem für die Dampfzuführung einer Turbine zu schaffen, welches einfach zu erstellen ist und bei welchem die Anzahl möglicher Leckstellen stark reduziert ist.

Die durch die Erfindung erreichten Vorteile sind im wesentlichen darin zu sehen, dass für den Sicherheitsölkreis keine separate Rohrleitung erstellt zu werden braucht, wodurch die Anzahl möglicher Leckstellen und damit eine Brandgefahr stark reduziert wird. Ferner wirkt es sich als besonders vorteilhaft aus, dass bei einem Druckabfall, beispielsweise infolge eines Rohrbruchs, sofort selbsttätig die Nachspeisung von Kraftöl unterbunden wird, wodurch Folgeschäden auf ein vergleichsweise geringes Ausmass reduziert werden. Trotz der Einsparung eines Rohrsystems ist in allen möglichen Betriebsfällen eine ausreichend hohe Dynamik der Turbinenregelung sicher gewährleistet.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
Fig. 1 eine erste Ausführungsform der Erfindung, und
Fig. 2 eine zweite Ausführungsform der Erfindung.

Bei beiden Figuren sind gleich wirkende Elemente mit gleichen Bezugszeichen versehen.

### WEGE ZUR AUSFÜHRUNG DER ERFINDUNG

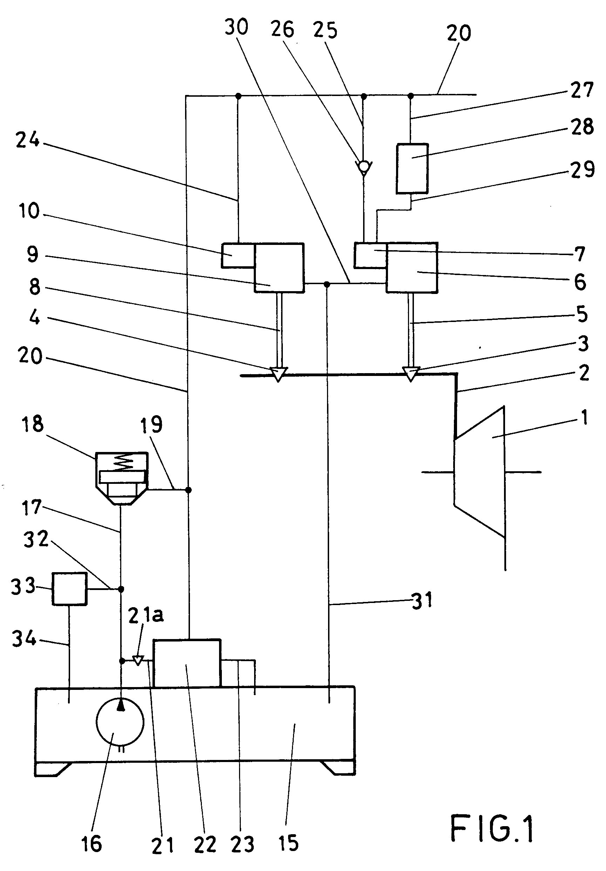

Die Figur 1 zeigt in schematischer Darstellung ein hydraulisches Sicherheits- und Regelsystem für die Dampfzuführung einer Turbine 1. Eine Heissdampfleitung 2, welche durch ein Dampfstellventil 3 oder ein Schnellschlussventil 4 geschlossen werden kann, führt Heissdampf in die Turbine 1. Dem Dampfstellventil 3 ist für dessen Betätigung über eine Ventilspindel 5 ein Stellantrieb 6 mit einem Plattenabflussverstärker 7 zugeordnet. Dem Schnellschlussventil 4 ist für dessen Betätigung über eine Ventilspindel 8 ein Schnellschlussantrieb 9 mit einem Plattenabflussverstärker 10 zugeordnet.

Öl wird in einer Ölablaufvorrichtung 15 gesammelt und von dort aus mittels einer druckgeregelten Pumpe 16 mit Druck beaufschlagt und als Kraftöl unter Druck in eine Leitung 17 eingespeist. Aus Redundanzgründen werden häufig zwei Pumpen 16 parallel geschaltet. Die Leitung 17 führt in ein Zuschaltventil 18. Vom Zuschaltventil 18 führt eine Leitung 19 in eine Hauptleitung 20. Von der Leitung 17 zweigt eine Leitung 21 ab, welche mit einer Blende 21a versehen ist, und mündet in eine zentral angeordnete Sicherheits-Absteuereinheit 22 ein. Es ist durchaus möglich die Funktion der Blende 21a in die Sicherheits-Absteuereinheit 22 zu integrieren. Von der Sicherheits-Absteuereinheit 22 geht eine Leitung 23 zurück in die Ölablaufvorrichtung 15. Ferner mündet die Hauptleitung 20 in die Sicherheits-Absteuereinheit 22 ein. Die Sicherheits-Absteuereinheit 22 beinhaltet häufig drei zu einer 2 von 3-Schaltung geschaltete hydraulische Ventile mit elektromagnetischer Auslösung. Es ist jedoch auch möglich, dass mehr als drei elektrohydraulische Ventile zu einer als 2 von 3-Schaltung wirkenden Anordnung zusammengeschaltet sind. Ferner ist es möglich die Sicherheits-Absteuereinheit 22 auch aus grundsätzlich anderen Elementen aufzubauen und dabei auch andere Schaltungsvarianten einzusetzen. Die Sicherheits-Absteuereinheit 22 steuert den Druck des Kraftöls in der Hauptleitung 20 im Bedarfsfall ab.

Von der Hauptleitung 20 zweigt eine Stichleitung 24 ab zum mit dem Schnellschlussantrieb 9 zusammenwirkenden Plattenabflussverstärker 10. Eine weitere Stichleitung 25 führt zum Plattenabflussverstärker 7. In dieser Stichleitung 25 ist ein Rückschlagventil 26 angeordnet, welches einen Ölfluss aus dem Plattenabflussverstärker 7 heraus ermöglicht. Im weiteren Verlauf zweigt von der Hauptleitung 20 eine weitere Stichleitung 27 ab. Diese Stichleitung 27 mündet in einen elektrohydraulischen Wandler 28 ein. Die elektrische Betätigung dieses Wandlers 28 ist ebensowenig dargestellt wie die diesem hydraulischen Sicherheits- und Regelsystem übergeordnete, mit einer Anlagenleittechnik in Verbindung stehende, in der Regel elektronische Steuerung. Der elektrohydraulische Wandler 28 ist über eine Leitung 29 mit dem Plattenabflussverstärker 7 verbunden, der mit dem Stellantrieb 6 zusammenwirkt. Eine Leitung 30 verbindet den Stellantrieb 6 mit dem Schnellschlussantrieb 9, sie sammelt das aus beiden austretende Öl, welches über eine angeschlossene Leitung 31 zurück in die Ölablaufvorrichtung 15 geführt wird.

Von der Leitung 17 zweigt eine Leitung 32 ab in ein Überdruckventil 33, welches in der Leitung 17 auftretende Druckstösse durch eine Leitung 34 in die Ölablaufvorrichtung 15 hinein abbaut.

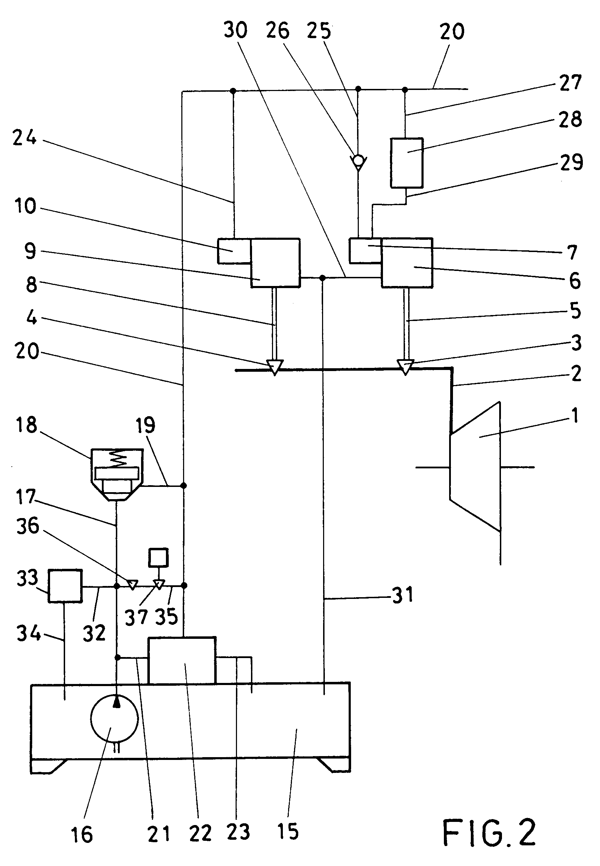

In der Fig. 2 ist die Leitung 17 parallel zur Leitung 19 durch eine Leitung 35 mit der Hauptleitung 20 verbunden. Die Leitung 35 weist eine Blende 36 auf, sie kann zudem durch ein elektromagnetisches Ventil 37 vollständig unterbrochen werden. Die Leitung 35 wird hier zur Auffüllung der Leitung 20 benutzt, anstelle der Leitung 21 in der Ausführung gemäss Fig. 1, sodass hier in der Leitung 21 keine Blende vorgesehen wird. Die Betätigung des elektromagnetischen Ventils 37 wird durch eine übergeordnete Anlagenleittechnik ausgelöst.

Die Hauptleitung 20 führt bei beiden Ausführungen zu weiteren, nicht dargestellten hydraulischen Antrieben, welche über weitere, ebenfalls nicht dargestellte Stichleitungen mit Kraftöl unter Druck versorgt werden. In den beiden Figuren ist die Hauptleitung 20 als ein einziger Strang dargestellt, von welchem Stichleitungen abzweigen. Diese einstrangige Ausbildung der Hauptleitung 20 hat den Vorteil, dass stets für alle hydraulischen Antriebe die gleichen Bedingungen gelten. Es ist jedoch auch möglich, die Hauptleitung 20 in Teilstränge aufzufächern, wobei diese Auffächerung im Bereich zwischen der Einmündung der Leitung 19 und der ersten Stichleitung 24 erfolgen müsste. Würden zwei Teilstränge vorgesehen, so könnte der eine Strang die hydraulischen Antriebe von mehreren Schnellschluss- und Dampfstellventilen über von ihm abgehende Stichleitungen versorgen, während der andere Strang beispielsweise Stellantriebe für die Regelung von Dampfentnahmen oder Überströmklappen über von ihm abgehende Stichleitungen versorgen könnte. Eine derartige Auffächerung bringt den Vorteil mit sich, dass das hydraulische Sicherheits- und Regelsystem für eine vergleichsweise grosse Anzahl von Antrieben übersichtlicher strukturiert werden kann.

Zur Erläuterung der Wirkungsweise sei zunächst die Fig. 1 näher betrachtet. Wenn in der Hauptleitung 20 kein Öldruck herrscht, so ist das Dampfstellventil 3 und auch das Schnellschlussventil 4 geschlossen und die Turbine 1 wird nicht mit Dampf versorgt. Soll nun die Turbine 1 hochgefahren werden, so muss zunächst die Hauptleitung 20 mit Öl unter Druck gefüllt werden. Während dieses Vorganges speist die Pumpe 16 Öl unter Druck durch die Leitung 17, die Leitung 21 und die Sicherheits-Absteuereinheit 22 in die Hauptleitung 20 ein und füllt diese auf. Die Blende 21a begrenzt den Ölstrom so, dass in der Hauptleitung 20 und den angeschlossenen Stichleitungen 24, 27 keine Druckschläge auftreten können. Sollte in der Hauptleitung 20 und in den zugehörigen Stichleitungen 24, 27 noch Luft vorhanden sein, so gelangt diese durch Leckstellen in den hydraulisch angetriebenen Geräten in die Leitungen 30 und 31 und schliesslich in die Ölablaufvorrichtung 15 von wo sie aus dem System entweichen kann. Das Zuschaltventil 18 schliesst während dieses Vorganges die Leitung 17 ab. Erst wenn der halbe Betriebsdruck in der Hauptleitung 20 erreicht ist, kann das Zuschaltventil 18, unterstützt durch diesen in der Leitung 19 anstehenden halben Betriebsdruck, öffnen und die Ölnachspeisung übernehmen. Im Normalbetrieb erfolgt die Ölnachspeisung dauernd durch das Zuschaltventil 18, welches dauernd einen vergleichsweise grossen Querschnitt ohne Drosselstellen freigibt. Die durch die Leitung 21 fliessende Ölmenge, die ja durch die Blende 21a stark begrenzt wird, ist daneben zu vernachlässigen.

Beim Erreichen des halben Betriebsdrucks in der Hauptleitung 20, wird über den Plattenabflussverstärker 10 der Schnellschlussantrieb 9 betätigt und das Schnellschlussventil 4 wird geöffnet und bleibt im Normalbetrieb dauernd offen. Der Stellantrieb 6 wird erst aktiviert, wenn der elektrohydraulische Wandler 28 von der übergeordneten Anlagenleittechnik ein elektrisches Signal erhält und daraufhin einen Weg freigibt für das Durchströmen des Kraftöls unter Druck von der Stichleitung 27 in die Leitung 29 und von dort weiter in den Plattenabflussverstärker 7. Die übergeordnete Anlagenleittechnik wird dieses Signal in der Regel erst dann freigeben, wenn der volle Betriebsdruck in der Hauptleitung 20 erreicht ist. Vom Plattenabflussverstärker 7 strömt das Kraftöl weiter in den Stellantrieb 6 und setzt diesen in Öffnungsrichtung in Bewegung. Mit dieser Bewegung öffnet das Dampfstellventil 3 ebenfalls und Dampf beginnt durch die Heissdampfleitung 2 in die Turbine 1 einzuströmen und setzt diese in Bewegung. Sobald der vorgegebene Sollwert der strömenden Dampfmenge erreicht ist, steuert die Anlagenleittechnik den elektrohydraulischen Wandler 28 so an, dass die Menge des durchströmenden Kraftöls nicht mehr erhöht und der Druck im Stellantrieb 6 etwa konstant gehalten wird. In diesem Betriebszustand werden nur kleine Abweichungen vom Sollwert ausgeregelt. Das aus dem Stellantrieb 6 austretende Öl gelangt zusammen mit dem aus dem Schnellschlussantrieb 9 austretenden Öl in die Leitung 30 und wird durch die mit dieser verbundenen Leitung 31 in die Ölablaufvorrichtung zurückgeführt. Von dort gelangt das Öl über die Pumpe 16 und das Zuschaltventil 18 erneut in die Hauptleitung 20 und damit in den Umlauf zurück.

Tritt nun im Bereich der Hauptleitung 20 oder in den durch sie mit Kraftöl unter Druck versorgten Geräten ein unzulässiges Leck auf, durch das Öl austritt, so fällt sofort der Druck in der Hauptleitung 20 ab. Dies hat zur Folge, dass das Zuschaltventil 18 gleichzeitig schliesst und die Ölnachspeisung unterbricht.

Durch den Druckabfall in der Hauptleitung 20 entsteht auch in der Stichleitung 25 ein Druckgefälle, das Rückschlagventil 26 öffnet sich und Öl strömt aus dem Plattenabflussverstärker 7 ab, wodurch im Stellantrieb 6 eine rasche Schliessbewegung ausgelöst wird, sodass das Dampfstellventil 3 ebenfalls schliesst. Dieser Schliessvorgang des Stellantriebes 6 erfolgt unabhängig vom elektrohydraulischen Wandler 28. Das Öl aus dem Antrieb des Stellantriebs 6 strömt dabei durch die Leitungen 30 und 31 ab in die Ölablaufvorrichtung 15.

Der Druckabfall in der Hauptleitung 20 wirkt über die Leitung 24 auch auf den Plattenabflussverstärker 10 ein, welcher ein schnelles Ansprechen des Schnellschlussantriebes 9 und damit ein schnelles Schliessen des Schnellschlussventils 4 auslöst. Das im Schnellschlussantrieb 9 befindliche Öl fliesst durch die Leitungen 30 und 31 ab in die Ölablaufvorrichtung 15.

Die Ausführungsform gemäss Fig. 2 unterscheidet sich im Bereich der Öleinspeisung von der bisher beschriebenen Ausführungsform. Das Auffüllen der Hauptleitung 20 erfolgt durch die Leitung 35, die Leitung 21 hat hier lediglich die Funktion, die Sicherheits-Absteuereinheit 22 mit Kraftöl zu versorgen, um so einen hinreichenden Kraftüberschuss bei der Betätigung der in dieser Einheit arbeitenden elektrohydraulischen Ventile sicherzustellen. Die Blende 36 begrenzt dabei die einströmende Ölmenge, sodass in der Hauptleitung 20 keine Druckschläge auftreten können. Das elektromagnetische Ventil 37 ist während des gesamten Füllvorganges offen. Sobald in der Hauptleitung 20 der halbe Betriebsdruck erreicht ist, öffnet auch in dieser Ausführungsform, unterstützt durch den Druck in der Hauptleitung 20, das Zuschaltventil 18 und übernimmt das weitere Auffüllen. Das elektromagnetische Ventil 37 schliesst danach die Leitung 35 ab und bleibt im Normalbetrieb dauernd geschlossen. Die gesamte Nachspeisung des Kraftöls in die Hauptleitung 20 erfolgt durch das Zuschaltventil 18 und die Leitung 19, wie bereits beschrieben, sodass auch hier im Falle eines Druckabfalls im Bereich der Hauptleitung sofort das Zuschaltventil 18 die Ölnachspeisung blockiert. Auch hier ist es vorteilhaft, dass in diesem Fall kein Öl zusätzlich in die Hauptleitung 20 gelangt, wodurch nur ein mengenmässig stark eingeschränkter Ölaustritt im Bereich einer Leckstelle möglich ist. Beim Absteuern des Zuschaltventils 18 auftretende Druckstösse werden auch in dieser Ausführung durch das Überdruckventil 33 abgebaut in die Ölablaufvorrichtung 15 hinein.

Bei einer derartigen Notabschaltung wirkt es sich als besonders vorteilhaft aus, dass unmittelbar nach dem ersten Anzeichen eines Schadens, nämlich dem Druckabfall, sofort die Ölnachspeisung selbsttätig unterbrochen wird, sodass nur wenig Öl aus der Leckstelle austreten kann. Hierdurch wird die Brandgefahr im Bereich um die heisse Turbine 1 wesentlich reduziert. Zudem wird auch die Gefahr von Folgenschäden durch weiter unkontrolliert austretendes Öl vermieden.

Bei einer betriebsbedingten Abschaltung der Turbine 1 wird mit Hilfe des elektrohydraulischen Wandlers 28 der Stellantrieb 6 kontrolliert in Schliessrichtung bewegt, bis das Dampfstellventil 3 geschlossen ist. In diesem Betriebszustand kann das System bleiben, wenn mit einem baldigen Anfahren der Turbine 1 gerechnet werden muss. Soll jedoch die Turbine 1 abgestellt werden, so wird nach dem Schliessen des Dampfstellventils 3 durch einen elektrischen Befehl, der von der Anlagenleittechnik her eingespeist wird, die Sicherheits-Absteuereinheit 22 angeregt und dadurch die Hauptleitung 20 über die Leitung 23 druckentlastet. Durch den gleichen elektrischen Befehl wird auch die Pumpe 16 abgestellt. Das Zuschaltventil 18 sperrt auch in diesem Fall im Augenblick der Druckentlastung sofort die Ölnachspeisung in die Hauptleitung 20.

Die Sicherheits-Absteuereinheit 22 stellt sicher, dass auch bei einem Ausfall der elektrischen Energieversorgung die Turbine 1 in einen kontrollierten Betriebszustand heruntergefahren werden kann. Das hydraulische Sicherheits- und Regelsystem gemäss vorliegender Erfindung arbeitet demnach sowohl bei Hydraulikstörungen als auch bei Störungen im elektrischen Bereich absolut zuverlässig. Dieses System ist zudem auch wirtschaftlich vorteilhaft, da ein separates Sicherheitsölsystem eingespart werden kann ohne jedoch auf die Vorteile dieses Sicherheitsölsystems bezüglich erhöhter Betriebssicherheit verzichten zu müssen. Die Sicherheits-Absteuereinheit 22 arbeitet in diesem hydraulischen Sicherheits- und Regelsystem genau so, wie wenn sie einen separaten Sicherheitsölkreis überwachen müsste.

### BEZEICHNUNGSLISTE

- 1: Turbine
- 2: Heissdampfleitung
- 3: Dampfstellventil
- 4: Schnellschlussventil
- 5: Ventilspindel
- 6: Stellantrieb
- 7: Plattenabflussverstärker
- 8: Ventilspindel
- 9: Schnellschlussantrieb
- 10: Plattenabflussverstärker
- 15: Ölablaufvorrichtung
- 16: Pumpen
- 17: Leitung
- 18: Zuschaltventil
- 19: Leitung
- 20: Hauptleitung
- 21: Leitung
- 21a: Blende
- 22: Sicherheits-Absteuereinheit
- 23: Leitung
- 24, 25: Stichleitung
- 26: Rückschlagventil
- 27: Stichleitung
- 28: elektrohydraulischer Wandler
- 29: Leitung
- 30,31,32: Leitung
- 33: Überdruckventil
- 34,35: Leitung
- 36: Blende
- 37: Ventil

## Patentansprüche

1. Hydraulisches Sicherheits- und Regelsysstem für die Dampfzuführung einer Turbine (1) mit mindestens einem Schnellschlussventil (4), mit mindestens einem durch Kraftöl betätigten Dampfstellventil (3), mit mindestens einer zentralen Sicherheits- Absteuereinheit (22), mit einer durch die Sicherheits-Absteuereinheit (22) überwachten Hauptleitung (20) für die hydraulische Betätigung, mit einer Ölablaufvorrichtung (15) und mit mindestens einer Pumpe (16) für das Kraftöl,
dadurch gekennzeichnet,
- dass die überwachte Hauptleitung (20) sowohl als Kraftölversorgung als auch als Sicherheitsölsystem ausgelegt ist, und
- dass das Kraftöl durch eine Leitung (17) durch mindestens ein Zuschaltventil (18) und eine weitere Leitung (19) in die Hauptleitung (20) eingespeist wird.

2. Hydraulisches Sicherheits- und Regelsystem nach Anspruch 1, dadurch gekennzeichnet,
- dass das mindestens eine Zuschaltventil (18) durch einen in der Leitung (17) entstehenden Druck in Verbindung mit einem in der Hauptleitung (20) herrschenden Druck in Öffnungsrichtung betätigbar ausgebildet ist.

3. Hydraulisches Sicherheits- und Regelsystem nach Anspruch 1, dadurch gekennzeichnet,
- dass die Sicherheits-Absteuereinheit (22) durch eine Leitung (21) mit Öl unter Druck beaufschlagt wird und durch eine Leitung (23) mit der Ölablaufvorrichtung (15) verbunden ist.

4. Hydraulisches Sicherheits- und Regelsystem nach Anspruch 1, dadurch gekennzeichnet,
- dass die Hauptleitung (20) lediglich einen Strang aufweist.

5. Hydraulisches Sicherheits- und Regelsystem nach Anspruch 1, dadurch gekennzeichnet,
- dass die Hauptleitung (20) im Bereich nach der Einmündung der Leitung (19) in mindestens zwei Teilstränge aufgefächert wird.

6. Hydraulisches Sicherheits- und Regelsystem nach Anspruch 1, dadurch gekennzeichnet,
- dass das Kraftöl vor dem Öffnen des Zuschaltventils (18) über mindestens eine separate Leitung (21) in die Hauptleitung (20) eingespeist wird, und
- dass die mindestens eine separate Leitung (21) von der Leitung (17) aus durch die zentrale Sicherheits-Absteuereinheit (22) in die Hauptleitung (20) führt.

7. Hydraulisches Sicherheits- und Regelsystem nach Anspruch 1, dadurch gekennzeichnet,
- dass das Kraftöl vor dem Öffnen des Zuschaltventils (18) über mindestens eine separate Leitung (35) in die Hauptleitung (20) eingespeist wird, und
- dass die mindestens eine separate Leitung (35) direkt die Leitung (17) mit der Hauptleitung (20) verbindet.

8. Hydraulisches Sicherheits- und Regelsystem nach Anspruch 7, dadurch gekennzeichnet,
- dass die mindestens eine separate Leitung (35), welche die Leitung (17) direkt mit der Hauptleitung (20) verbindet, mit einem elektromagnetischen Ventil (37) verschliessbar ausgebildet ist.

9. Hydraulisches Sicherheits- und Regelsystem nach Anspruch 1, dadurch gekennzeichnet,
- dass einem Schnellschlussantrieb (9) für die Betätigung des Schnellschlussventils (4) ein Plattenabflussverstärker (10) vorgeschaltet ist, und
- dass einem Stellantrieb (6) für die Betätigung des Dampfstellventils (3) ein elektrohydraulischer Wandler (28) und ein Plattenabflussverstärker (7) vorgeschaltet sind.

10. Hydraulisches Sicherheits- und Regelsystem nach Anspruch 9, dadurch gekennzeichnet,
- dass in einer Stichleitung (25) zwischen dem Plattenabflussverstärker (7) und einer Hauptleitung (20) ein Rückschlagventil (26) vorgesehen ist, welches einen Ölstrom aus dem Plattenabflussverstärker (7) heraus ermöglicht.

## Claims

1. Hydraulic safety and regulating system for the steam feed of a turbine (1) having at least one rapid-action valve (4), at least one steam-regulating valve (3) actuated by power oil, at least one central safety downward-control unit (22), a main line (20), monitored by the safety downward-control unit (22), for the hydraulic actuation, an oil draining device (15) and at least one pump (16) for the power oil, characterized
- in that the monitored main line (20) is designed both as a power oil supply and as a safety oil system, and
- in that the power oil is fed into a main line (20) through a line (17), through at least one connecting valve (18) and a further line (19).

2. Hydraulic safety and regulating system according to Claim 1, characterized
- in that the at least one connecting valve (18) is constructed to be capable of actuation in the opening direction by a pressure produced in the line (17) in conjunction with a pressure prevailing in the main line (20).

3. Hydraulic safety and regulating system according to Claim 1, characterized
- in that the safety downward-control unit (22) is pressurized by means of oil via a line (21) and is connected to the oil draining device (15) via a line (23).

4. Hydraulic safety and regulating system according to Claim 1, characterized
- in that the main line (20) has only one circuit.

5. Hydraulic safety and regulating system according to Claim 1, characterized
- in that the main line (20) is fanned out in the region after the termination of the line (19) into at least two subcircuits.

6. Hydraulic safety and regulating system according to Claim 1, characterized
- in that before the opening of the connecting valve (18) the power oil is fed into the main line (20) via at least one separate line (21), and
- in that the at least one separate line (21) leads from the line (17) into the main line (20) through the central safety downward-control unit (22).

7. Hydraulic safety and regulating system according to Claim 1, characterized
- in that before the opening of the connecting valve (18) the power oil is fed into the main line (20) via at least one separate line (35), and
- in that the at least one separate line (35) directly connects the line (17) to the main line (20).

8. Hydraulic safety and regulating system according to Claim 7, characterized
- in that the at least one separate line (35), which connects the line (17) directly to the main line (20), is constructed so that it can be shut off by an electromagnetic valve (37).

9. Hydraulic safety and regulating system according to Claim 1, characterized
- in that a plate-type drainage amplifier (10) is connected upstream of a rapid-action drive (9) for actuating the rapid-action valve (4), and
- in that an electrohydraulic transducer (28) and a plate-type drainage amplifier (7) are connected upstream of an actuator (6) for actuating the steam-regulating valve (3).

10. Hydraulic safety and regulating system according to Claim 9, characterized
- in that a check valve (26), which facilitates a flow of oil from the plate-type drainage amplifier (7), is provided in a tap line (25) between the plate-type drainage amplifier (7) and a main line (20).

## Revendications

1. Système hydraulique de sécurité et de régulation pour la fourniture de vapeur à une turbine (1) avec au moins une vanne à fermeture rapide (4), avec au moins une servovanne (3) actionnée par une huile motrice, avec au moins une unité centrale de commande de sécurité (22), avec une conduite principale (20) pour les manoeuvres hydrauliques, surveillée par l'unité de commande de sécurité (22), avec un dispositif d'évacuation de l'huile (15) et avec au moins une pompe (16) pour l'huile motrice, caractérisé en ce que
- la conduite principale (20) surveillée est constituée aussi bien comme alimentation en huile motrice que comme système d'huile de sécurité; et en ce que
- l'huile motrice est introduite dans la conduite principale (20) par une conduite (17) par l'intermédiaire d'au moins une soupape de mise en circuit (18) et une autre conduite (19).

2. Système hydraulique de sécurité et de régulation suivant la revendication 1, caractérisé en ce que
- ladite au moins une soupape de mise en circuit (18) peut être actionnée dans le sens de l'ouverture par une pression établie dans la conduite (17) en liaison avec une pression régnant dans la conduite principale (20).

3. Système hydraulique de sécurité et de régulation suivant la revendication 1, caractérisé en ce que
- l'unité de commande de sécurité (22) est alimentée en huile sous pression par une conduite (21) et est reliée par une conduite (23) au dispositif d'évacuation de l'huile (15).

4. Système hydraulique de sécurité et de régulation suivant la revendication 1, caractérisé en ce que
- la conduite principale (20) ne présente qu'une seule canalisation.

5. Système hydraulique de sécurité et de régulation suivant la revendication 1, caractérisé en ce que
- la conduite principale (20) est subdivisée en au moins deux canalisations partielles dans la région située après l'embouchure de la conduite (19).

6. Système hydraulique de sécurité et de régulation suivant la revendication 1, caractérisé en ce que
- l'huile motrice est introduite dans la conduite principale (20) avant l'ouverture de la soupape de mise en circuit (18) par au moins une conduite séparée (21); et en ce que
- ladite au moins une conduite séparée (21) mène à la conduite principale (20) à partir de la conduite (17) à travers l'unité centrale de commande de sécurité (22).

7. Système hydraulique de sécurité et de régulation suivant la revendication 1, caractérisé en ce que
- l'huile motrice est introduite dans la conduite principale (20) avant l'ouverture de la soupape de mise en circuit (18) par au moins une conduite séparée (35); et en ce que
- ladite au moins une conduite séparée (35) relie directement la conduite (17) à la conduite principale (20).

8. Système hydraulique de sécurité et de régulation suivant la revendication 7, caractérisé en ce que
- ladite au moins une conduite séparée (35), qui relie directement la conduite (17) à la conduite principale (20), peut être fermée avec une vanne électro-magnétique (37).

9. Système hydraulique de sécurité et de régulation suivant la revendication 1, caractérisé en ce que
- un amplificateur d'écoulement à plaques (10) est monté avant une commande de fermeture rapide (9) pour actionner la vanne à fermeture rapide (4); et en ce que
- un convertisseur électrohydraulique (28) et un amplificateur d'écoulement à plaques (7) sont montés avant un servomoteur (6) pour actionner la servovanne de vapeur (3).

10. Système hydraulique de sécurité et de régulation suivant la revendication 9, caractérisé en ce que
- dans une conduite de branchement (25) entre l'amplificateur d'écoulement à plaques (7) et une conduite principale (20), il est prévu une soupape antiretour (26), qui permet un écoulement d'huile hors de l'amplificateur d'écoulement à plaques (7).
